# EUROPÄISCHE PATENTANMELDUNG

(11) **EP 4 030 160 A1**
(43) Veröffentlichungstag der Anmeldung: **20.07.2022**
(21) Anmeldenummer: 21151798.2
(22) Anmeldetag: 15.01.2021
(51) Int. Cl.: G01M 13/00, G01M 13/022

(54) **VORRICHTUNG ZUR ÜBERWACHUNG EINER EINE ERSTE WELLE UND EINE ZWEITE WELLE KUPPELNDEN WELLENKUPPLUNG**

(71) Anmelder: Siemens Aktiengesellschaft, 80333 München (DE)
(72) Erfinder: Schimmer, Jürgen, 90473 Nürnberg (DE); Nolting, Christoph, 91315 Höchstadt/Aisch (DE); Scheibner, Dirk, 90473 Nürnberg (DE); Zettner, Jürgen, 90587 Veitsbronn (DE)

(57) **Zusammenfassung**

Die Erfindung betrifft eine Vorrichtung (10) zur Überwachung einer eine erste Welle (3) und eine zweite Welle (31) kuppelnden Wellenkupplung (7), aufweisend: eine optische Einheit (12) mit einem Empfangselement (14), ausgebildet zum Empfang einer elektromagnetischen Strahlung, insbesondere Licht; eine Veränderungseinheit (11), ausgebildet zur Veränderung einer auf das Empfangselement (14) auftreffenden Strahlungsmenge (41) bei einem asynchronen Verlauf der ersten Welle (3) zur zweiten Welle (31). Die Erfindung betrifft zudem eine Wellenkupplung (7) sowie eine dynamoelektrische rotatorische Maschine (100).

## Beschreibung

Die Erfindung betrifft eine Vorrichtung zur Überwachung einer eine erste Welle und eine zweite Welle kuppelnden Wellenkupplung.

Wellenkupplungen sind kritische Komponenten in Antriebssträngen, die z. B. bei Überlast beschädigt werden können.

Besonders sicherheitskritisch ist beispielsweise eine defekte Ankopplung eines Gebers an einen Motor, da ein fehlerhaftes Referenzsignal für eine Regelung vorliegen kann und so ein sicherer Betrieb des Motors nicht gewährleistet werden kann. Zudem können bei derartigen Schäden keine präzisen Drehzahlvorgaben mehr eingehalten werden.

Um Schäden an Wellenkupplungen zu vermeiden, werden meist einzelne oder alle Komponenten der Wellenkupplung überdimensioniert. Dies ist jedoch sehr kostenintensiv.

Der Erfindung liegt die Aufgabe zugrunde, dies zu verbessern.

Die Lösung der Aufgabe gelingt durch Anspruch 1, d. h. eine Vorrichtung zur Überwachung einer eine erste Welle und eine zweite Welle kuppelnden Wellenkupplung, aufweisend:
- eine optische Einheit mit einem Empfangselement, ausgebildet zum Empfang einer elektromagnetischen Strahlung, insbesondere Licht,
- eine Veränderungseinheit, ausgebildet zur Veränderung einer auf das Empfangselement auftreffenden Strahlungsmenge bei einem asynchronen Verlauf der ersten Welle zur zweiten Welle.

Die Erfindung eignet sich für verschiedene Wellenkupplungen, z. B. für eine Wellenkupplung, die eine Maschinenwelle und eine Last kuppelt, sowie für eine Wellenkupplung, die eine Geberwelle und eine Maschinenwelle kuppelt.

Insbesondere für Servomotoren kann die Erfindung angewendet werden. Servomotoren sind für Arbeitsaufgaben konzeptioniert, die eine hohe Präzision erfordern. Hierfür ist eine Kenntnis über eine Integrität einer Wellenkupplung besonders vorteilhaft.

Elektromagnetische Strahlung in Form von Licht eignet sich besonders gut. Unter Licht wird in der Regel der sichtbare Teil des elektromagnetischen Spektrums im Bereich von 380 nm bis 780 nm verstanden. Auch unsichtbare Bereiche von elektromagnetischer Strahlung können für die Erfindung verwendet werden, insbesondere Infrarotlicht oder ultraviolettes Licht.

Vorteilhaft ist eine Ausführungsform, wonach das Empfangselement als Fotodiode ausgebildet ist.

Eine Fotodiode ist von Vorteil, da sie günstig und robust ist.

Es ist jedoch auch möglich, dass das Empfangselement als Diodenarray, Kamera oder allgemeiner Photodetektor ausgebildet ist. Auch andere Formen sind möglich.

Vorteilhaft ist eine Ausführungsform, wonach die optische Einheit ein Aussendungselement, ausgebildet zur Aussendung einer/der elektromagnetischen Strahlung, insbesondere Licht, aufweist.

Vorteilhaft ist eine Ausführungsform, wonach das Aussendungselement zur Aussendung gebündelter elektromagnetischer Strahlung und/oder zur Aussendung elektromagnetischer Strahlung mit einer konstanten Wellenfront ausgebildet ist.

Vorteilhaft ist eine Ausführungsform, wonach das Aussendungselement eine Laserdiode ist.

Eine Laserdiode ist von Vorteil, da sie günstig und robust ist.

Es können auch andersartige Quellen für kohärentes Licht genutzt werden.

Vorteilhaft ist eine Ausführungsform, wonach die Veränderungseinheit ein holografisch optisches Bauelement aufweist, wobei das holografisch optische Bauelement an und/oder innerhalb der ersten Welle anordenbar ist.

Holografisch optische Bauelemente sind vorzugsweise Elemente, deren holografische Eigenschaften für eine Optik von Geräten verwendet werden. Es ist möglich, mit Hologrammen herkömmliche Linsen, Spiegel und Prismen zu ersetzen. Von besonderem Vorteil sind aber oft die zusätzlichen holografischen Eigenschaften.

Holografisch optische Bauelemente haben besondere Eigenschaften, beispielsweise eine Selektivität einer Farbe und eines Einfallswinkels von Licht.

Holografisch optische Bauelemente können z. B. für einen bestimmten Einfallswinkel das Licht brechen, für andere Einfallswinkel aber transparent sein. Die unterschiedliche Beugung von Licht, insbesondere abhängig von einer Wellenlänge, ermöglicht eine Aufspaltung in Spektralfarben wie bei Prismen. Es ist beispielsweise auch möglich, mit Hilfe von Reflexionshologrammen planare Spiegel, Hohlspiegel oder Wölbspiegel zu konstruieren, die das Licht so reflektieren, dass der Einfallswinkel anders als der Ausfallswinkel ist.

Das holografisch optische Bauelement ist z. B. eine Prägefolie. Diese ist leicht zu montieren, unempfindlich bei großen Beschleunigungen und, insbesondere in großen Stückzahlen, preisgünstig.

Als holografisch optisches Bauelement können auch Kunststoffbauteile mit Direktstrukturierung eingesetzt werden. Auch andere Formen sind möglich.

Vorteilhaft ist eine Ausführungsform, wonach die Veränderungseinheit eine Blende aufweist, wobei die Blende an und/oder innerhalb der zweiten Welle anordenbar ist.

Vorteilhaft ist eine Ausführungsform, wonach die Blende in einer wenigstens im Wesentlichen regelmäßigen Abfolge radial angeordnete Schlitze und radial angeordnete gefüllte Bereiche aufweist.

Es sind jedoch auch andersartige Formen möglich, bspw. Formen, die eine kontinuierliche Intensitätsvariation erzeugen (z. B. eine umlaufende Sinuskurve). Auch andere Formen sind möglich.

Vorteilhaft ist eine Ausführungsform, wonach die Blende eine wenigstens im Wesentlichen mittig angeordnete Öffnung aufweist.

Dies dient einer Beleuchtung.

Vorteilhaft ist eine Ausführungsform, wonach das holografisch optische Bauelement durch das Aussendungselement mit elektromagnetischer, insbesondere kohärenter, Strahlung beleuchtbar/bestrahlbar ist, wobei das holografisch optische Bauelement ein Muster, insbesondere durch Beugung und/oder Brechung und/oder Reflexion und/oder Interferenz der Strahlung, erzeugt, wobei das Muster in einer wenigstens im Wesentlichen regelmäßigen Abfolge radial angeordnete Bereiche mit einer ersten Strahlungsmenge und radial angeordnete Bereiche mit einer zweiten Strahlungsmenge aufweist.

Dies kann z. B. ein Muster mit hellen und dunklen Bereichen sein.

Vorteilhaft ist eine Ausführungsform, wonach die Bereiche mit der ersten Strahlungsmenge durch die gefüllten Bereiche der Blende abschirmbar und/oder abschattbar sind.

Vorteilhaft ist eine Ausführungsform, wonach das holografische optische Bauelement und die Blende derart angeordnet sind, dass bei einem synchronen Verlauf der ersten Welle zur zweiten Welle die zweite Strahlungsmenge auf das Empfangselement auftrifft.

Vorteilhaft ist eine Ausführungsform, wonach das holografische optische Bauelement und die Blende derart angeordnet sind, dass bei einem asynchronen Verlauf der ersten Welle zur zweiten Welle die erste Strahlungsmenge wenigstens teilweise auf das Empfangselement auftrifft.

Ein asynchroner Verlauf, insbesondere ein asynchroner Verlauf, der nicht nur kurz andauert, ist meist ein Hinweis auf einen Fehlerfall. Eine Schädigung der Wellenkupplung ist dadurch erkennbar.

Die Erfindung bietet den Vorteil, dass eine kostenintensive Überdimensionierung von insbesondere Geberkupplung, Geberwelle und Geberlager nicht länger nötig ist.

Durch die Erfindung ist es möglich, beispielsweise durch Überlast geschädigte oder zerstörte, Kupplungen zu erkennen.

Insbesondere für Servomotoren eignet sich die Erfindung gut. Servomotoren weist oftmals eigengelagerte Geber auf. Hierbei ist die Geberwelle über eine Kupplung mit Maschinenwelle verbunden. Bei einem Lagerschaden der Geberlager werden diese schwergängig und die Geberkupplung wird stärker belastet. Dies kann zur Zerstörung führen. Die Erfindung bietet jedoch den Vorteil, dass dies erkannt werden kann.

Die Lösung der oben gestellten Aufgabe gelingt ferner durch Anspruch 14, d. h. eine Wellenkupplung, aufweisend eine derartige Vorrichtung.

Die Lösung der oben gestellten Aufgabe gelingt ferner durch Anspruch 15, d. h. eine dynamoelektrische rotatorische Maschine, aufweisend: eine erste Welle und eine zweite Welle, wobei die erste Welle und die zweite Welle mittels einer Wellenkupplung gekuppelt sind; sowie eine derartige Vorrichtung.

Vorteilhaft ist eine Ausführungsform, wonach die erste Welle und/oder die zweite Welle als Hohlwelle ausgebildet ist.

Im Folgenden wird die Erfindung anhand der in den Figuren dargestellten Ausführungsbeispiele näher beschrieben und erläutert. Es zeigen:
- FIG 1: eine Explosionsdarstellung eines beispielhaften Servomotors,
- FIG 2: eine mögliche Ausführung der Vorrichtung 10 zur Überwachung einer eine erste Welle und eine zweite Welle kuppelnden Wellenkupplung,
- FIG 3: eine mögliche Ausführung einer Blende,
- FIG 4: ein Verfahren.

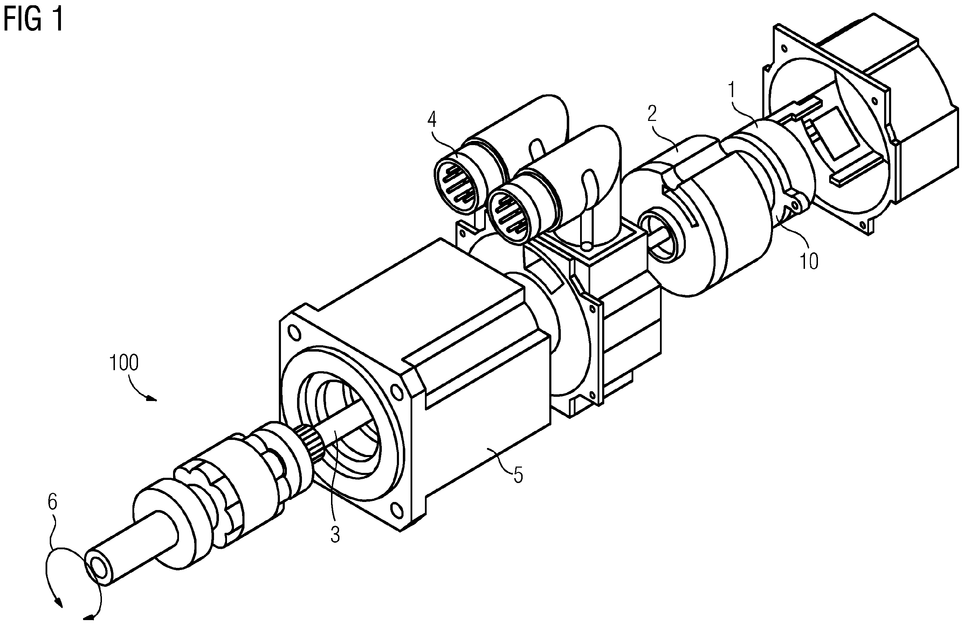

FIG 1 zeigt eine Explosionsdarstellung eines beispielhaften Servomotors 100. Der Servomotor weist einen Geber 1, eine Bremse 2, eine Welle 3, eine Anschlussvorrichtung 4 sowie ein Aktivteil 5 auf.

Die Figur zeigt ferner eine Rotationsrichtung 6.

Die Figur zeigt zudem eine Vorrichtung 10 zur Überwachung einer eine erste Welle und eine zweite Welle kuppelnden Wellenkupplung. Die Vorrichtung 10 wird in den folgenden Figuren näher beschrieben. Die Vorrichtung 10 kann zur Überwachung einer Wellenkupplung dienen, die eine Geberwelle mit einer Maschinenwelle kuppelt (wie in der Figur dargestellt). Ferner ist es denkbar, dass die Vorrichtung 10 zur Überwachung einer Kupplung der Maschinenwelle mit einer Last angeordnet ist. Die Vorrichtung 10 eignet sich auch für andere Wellenkupplungen.

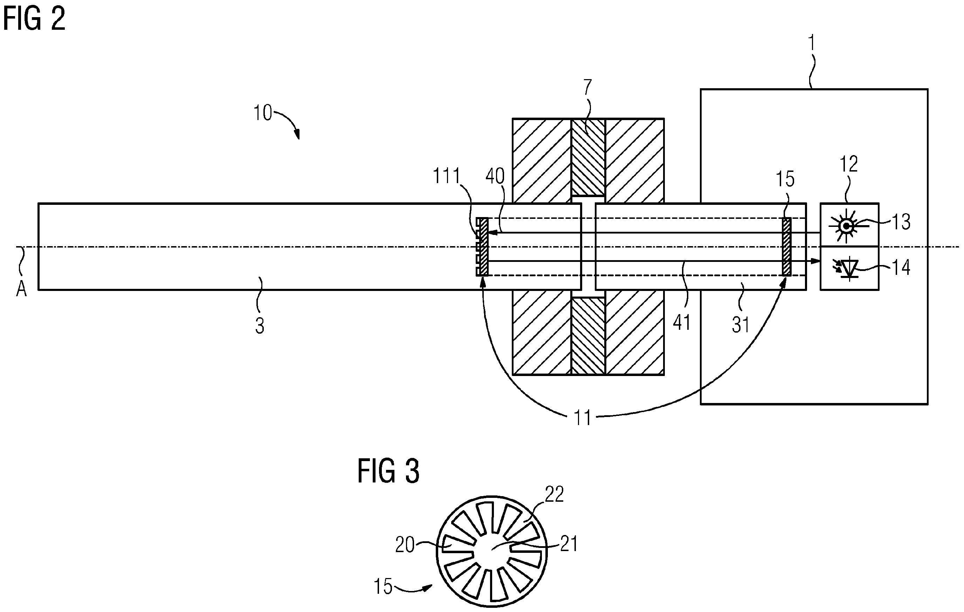

FIG 2 zeigt eine mögliche Ausführung der Vorrichtung 10 zur Überwachung einer eine erste Welle und eine zweite Welle kuppelnden Wellenkupplung.

Die erste Welle ist in der Figur eine Maschinenwelle 3. Die zweite Welle ist in der Figur eine Geberwelle 31. Die Figur zeigt zudem, dass die Maschinenwelle 3 und die Geberwelle 31 mittels einer Kupplung 7 (auch: Wellenkupplung) gekuppelt sind.

Die Figur zeigt zudem eine Rotationsachse A.

Die Vorrichtung 10 umfasst eine optische Einheit 12 mit einem Empfangselement, ausgebildet zum Empfang einer elektromagnetischen Strahlung, insbesondere Licht. Dies ist der Figur eine Fotodiode 14. Auch andere Empfangselemente sind denkbar.

Die Figur zeigt ferner, dass die optische Einheit 12 ein Aussendungselement, ausgebildet zur Aussendung der elektromagnetischen Strahlung, insbesondere Licht, aufweist. Das Aussendungselement ist vorteilhaft zur Aussendung gebündelter elektromagnetischer Strahlung und/oder zur Aussendung elektromagnetischer Strahlung mit einer konstanten Wellenfront ausgebildet. Die Aussendung der Strahlung ist mit dem Pfeil 40 gekennzeichnet.

Dies ist in der Figur eine Laserdiode 13. Auch andere Aussendungselemente sind denkbar.

Die optische Einheit 12 ist in der Figur in oder am Geber 1 angeordnet.

Die Vorrichtung 10 umfasst zudem eine Veränderungseinheit 11, ausgebildet zur Veränderung einer auf das Empfangselement auftreffenden Strahlungsmenge bei einem asynchronen Verlauf der ersten Welle, in der Figur die Maschinenwelle 3, zur zweiten Welle, in der Figur die Geberwelle 31.

Die Veränderungseinheit 11 weist vorteilhaft ein holografisch optisches Bauelement 111 auf, wobei das holografisch optische Bauelement 111 an und/oder innerhalb der ersten Welle anordenbar ist. In der Figur ist das holografisch optische Bauelement innerhalb der Maschinenwelle 3 angeordnet. Die Maschinenwelle 3 ist hierzu vorzugsweise als Hohlwelle ausgeführt.

Das holografisch optische Bauelement 111 ist beispielsweise eine Prägefolie.

Die Veränderungseinheit 11 weist in der Figur eine Blende 15 auf, wobei die Blende an und/oder innerhalb der zweiten Welle anordenbar ist. In der Figur ist die Blende 15 innerhalb der Geberwelle 31 angeordnet. Die Geberwelle 31 ist hierzu vorzugsweise als Hohlwelle ausgeführt.

Eine mögliche Ausführung der Blende 15 ist in FIG 3 dargestellt.

Die Blende 15 weist in der Figur in einer wenigstens im Wesentlichen regelmäßigen Abfolge radial angeordnete Schlitze 20 und radial angeordnete gefüllte Bereiche 22 auf.

Eine mittig angeordnete, wenigstens im Wesentlichen kreisrunde Öffnung 21 ist von Vorteil, da sie einer Beleuchtbarkeit dient. Die Blende 15 ist beispielsweise als Hohlzylinder oder als Scheibe mit mittiger Öffnung ausgeführt.

Das holografisch optische Bauelement ist durch das Aussendungselement (in der Figur die Laserdiode 13) mit elektromagnetischer, insbesondere kohärenter, Strahlung beleuchtbar bzw. bestrahlbar. Dies zeigt Pfeil 40.

Das holografisch optische Bauelement 111 erzeugt vorteilhaft ein Muster (dargestellt durch Pfeil 41), insbesondere durch Beugung und/oder Brechung und/oder Reflexion der Strahlung.

Das Muster weist vorteilhaft in einer wenigstens im Wesentlichen regelmäßigen Abfolge radial angeordnete Bereiche mit einer ersten Strahlungsmenge, also z. B. helle Bereiche, und radial angeordnete Bereiche mit einer zweiten Strahlungsmenge, also z. B. dunkle Bereiche, auf.

Die Bereiche mit der ersten Strahlungsmenge sind durch die gefüllten Bereiche der in FIG 3 gezeigten Blende 15 abschirmbar und/oder abschattbar.

Das holografische optische Bauelement 111 und die Blende 15 sind in der Figur derart angeordnet, dass bei einem synchronen Verlauf der Maschinenwelle 3 zur Geberwelle 31 die zweite Strahlungsmenge auf das Empfangselement (Fotodiode 14) auftrifft.

Das holografische optische Bauelement 111 und die Blende 15 sind derart angeordnet, dass bei einem asynchronen Verlauf der Maschinenwelle 3 zur Geberwelle 31 die erste Strahlungsmenge wenigstens teilweise auf die Fotodiode 14 auftrifft.

Die Fotodiode 14 detektiert somit eine Änderung der Strahlungsmenge und kann diese Information z. B. an eine Steuereinheit des Servomotors (nicht dargestellt) übermitteln.

In anderen Worten: In der als Hohlwelle ausgebildeten Geberwelle 31 sitzt eine Blende 15. Diese umfasst z.B. radiale Schlitze mit zentraler Öffnung für eine Beleuchtung. Auf das Wellenende der Maschinenwelle 3 wird ein reflektives Hologramm, z.B. in Form einer Prägefolie, montiert. Das Hologramm enthält vorteilhaft ein radiales hell-dunkel Muster und eine Linse, sodass es eine Abbildung am Ort der Blende 15 in der Geberwelle 31 erzeugt. Geberseitig wird in der Figur durch die Hohlwelle des Gebers 1 hindurch das Hologramm auf der Maschinenwelle mit vorzugsweise kohärentem Licht beleuchtet. Die Abbildung ist so gestaltet, dass helle Bereiche von der Blende in der Geberwelle abgeschattet werden.

Bewegen sich die beiden Wellen 3 und 31 synchron, entsteht eine stabile Abbildung. Bewegen sich die Wellen 3 und 31 im Fehlerfall jedoch relativ zueinander, so ändert sich die Helligkeit der Abbildung. Diese Änderung wird mit einer einfachen Fotodiode 14 detektiert.

Eine Torsion der Maschinenwelle 3 bei Belastung, insbesondere bei einem Drehmomentsprung, führt zu einer begrenzten Helligkeitsänderung. Tritt eine Änderung über diesen Bereich hinaus auf, wird ein Defekt der Ankopplung des Gebers 1 bzw. der gekoppelten Geberwelle 31 erkannt.

Dieses Prinzip ist zu einer Drehmomentmessung erweiterbar durch eine detailliertere Helligkeitsauswertung der Hologramm-Abbildung statt einer einfachen Schwellwertüberwachung.

Dabei wird eine begrenzte Helligkeitsänderung bei einer Torsion der Welle durch Drehmomentbelastung quantitativ erfasst und in einen entsprechenden Wert des Drehmoments gewandelt.

Zwischen der optischen Einheit 12, welche vorteilhaft geberseitig angeordnet ist und dem holografisch optischen Bauelement 111 ist eine Distanz von einigen Zentimetern vorteilhaft, z. B. 1 cm bis 50 cm.

Möglich ist jedoch auch, dass sich eine Distanz - bei sehr großen Maschinen - über mehrere Meter erstreckt, z, B. 1 bis 10 m.

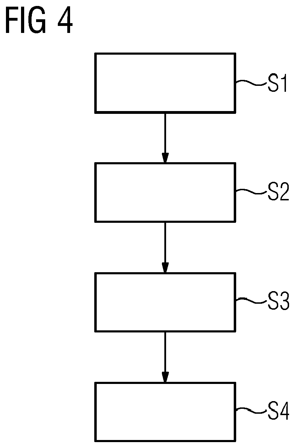

FIG 4 zeigt ein Verfahren.

In einem Verfahrensschritt S1 sendet das Aussendungselement elektromagnetische Strahlung, insbesondere Licht, aus.

Das holografisch optische Bauelement wird somit durch das Aussendungselement mit elektromagnetischer Strahlung bestrahlt, insbesondere mit Licht beleuchtet.

In einem Verfahrensschritt S2 wird durch das holografisch optische Bauelement ein Muster erzeugt, wobei das Muster in einer wenigstens im Wesentlichen regelmäßigen Abfolge radial angeordnete Bereiche mit einer ersten Strahlungsmenge und radial angeordnete Bereiche mit einer zweiten Strahlungsmenge aufweist.

In einem Verfahrensschritt S3 - bei einem synchronen Verlauf der ersten Welle zur zweiten Welle - trifft die zweite Strahlungsmenge auf das Empfangselement auf, da die Bereiche mit der ersten Strahlungsmenge durch die gefüllten Bereiche der Blende abgeschirmt bzw. abgeschattet werden.

In einem Verfahrensschritt S4 - bei einem asynchronen Verlauf der ersten Welle zur zweiten Welle - trifft die erste Strahlungsmenge wenigstens teilweise auf das Empfangselement auf. Durch den asynchronen Verlauf ist eine Abschattung nicht mehr gegeben.

## Patentansprüche

1. Vorrichtung (10) zur Überwachung einer eine erste Welle (3) und eine zweite Welle (31) kuppelnden Wellenkupplung (7), aufweisend:
- eine optische Einheit (12) mit einem Empfangselement, ausgebildet zum Empfang einer elektromagnetischen Strahlung, insbesondere Licht,
- eine Veränderungseinheit (11), ausgebildet zur Veränderung einer auf das Empfangselement auftreffenden Strahlungsmenge (41) bei einem asynchronen Verlauf der ersten Welle (3) zur zweiten Welle (31).

2. Vorrichtung (10) nach Anspruch 1, wobei das Empfangselement als Fotodiode (14) ausgebildet ist.

3. Vorrichtung (10) nach einem der vorhergehenden Ansprüche, wobei die optische Einheit (12) ein Aussendungselement, ausgebildet zur Aussendung einer/der elektromagnetischen Strahlung, insbesondere Licht, aufweist.

4. Vorrichtung (10) nach Anspruch 3, wobei das Aussendungselement zur Aussendung gebündelter elektromagnetischer Strahlung und/oder zur Aussendung elektromagnetischer Strahlung mit einer konstanten Wellenfront ausgebildet ist.

5. Vorrichtung (10) nach einem der Ansprüche 3 oder 4, wobei das Aussendungselement eine Laserdiode (13) ist.

6. Vorrichtung (10) nach einem der vorhergehenden Ansprüche, wobei die Veränderungseinheit (11) ein holografisch optisches Bauelement (111) aufweist, wobei das holografisch optische Bauelement (111) an und/oder innerhalb der ersten Welle (3) anordenbar ist.

7. Vorrichtung (10) nach einem der vorhergehenden Ansprüche, wobei die Veränderungseinheit (11) eine Blende (15) aufweist, wobei die Blende (15) an und/oder innerhalb der zweiten Welle (31) anordenbar ist.

8. Vorrichtung (10) nach Anspruch 7, wobei die Blende (15) in einer wenigstens im Wesentlichen regelmäßigen Abfolge radial angeordnete Schlitze (20) und radial angeordnete gefüllte Bereiche (22) aufweist.

9. Vorrichtung (10) nach einem der Ansprüche 7 oder 8, wobei die Blende (15) eine wenigstens im Wesentlichen mittig angeordnete Öffnung (21) aufweist.

10. Vorrichtung (10) nach Anspruch 9, wobei das holografisch optische Bauelement (111) durch das Aussendungselement (13) mit elektromagnetischer, insbesondere kohärenter, Strahlung beleuchtbar/bestrahlbar ist, wobei das holografisch optische Bauelement (111) ein Muster (41), insbesondere durch Beugung und/oder Brechung und/oder Reflexion und/oder Interferenz der Strahlung, erzeugt, wobei das Muster (41) in einer wenigstens im Wesentlichen regelmäßigen Abfolge radial angeordnete Bereiche mit einer ersten Strahlungsmenge und radial angeordnete Bereiche mit einer zweiten Strahlungsmenge aufweist.

11. Vorrichtung (10) nach Anspruch 10, wobei die Bereiche mit der ersten Strahlungsmenge durch die gefüllten Bereiche (22) der Blende (15) abschirmbar und/oder abschattbar sind.

12. Vorrichtung (10) nach einem der Ansprüche 7 bis 11, wobei das holografisch optische Bauelement (111) und die Blende (15) derart angeordnet sind, dass bei einem synchronen Verlauf der ersten Welle (3) zur zweiten Welle (31) die zweite Strahlungsmenge auf das Empfangselement (14) auftrifft.

13. Vorrichtung (10) nach einem der Ansprüche 7 bis 12, wobei das holografisch optische Bauelement (111) und die Blende (15) derart angeordnet sind, dass bei einem asynchronen Verlauf der ersten Welle (3) zur zweiten Welle (31) die erste Strahlungsmenge wenigstens teilweise auf das Empfangselement (14) auftrifft.

14. Wellenkupplung (7), aufweisend eine Vorrichtung (10) nach einem der Ansprüche 1 bis 13.

15. Dynamoelektrische rotatorische Maschine (100), aufweisend:
- eine erste Welle (3),
- eine zweite Welle (31), wobei die erste Welle (3) und die zweite Welle (31) mittels einer Wellenkupplung (7) gekuppelt sind,
- eine Vorrichtung (10) nach einem der Ansprüche 1 bis 13.

16. Dynamoelektrische rotatorische Maschine (100) nach Anspruch 15, wobei die erste Welle (3) und/oder die zweite Welle (31) als Hohlwelle ausgebildet ist.
